(19) Europäisches Patentamt
European Patent Office
Office européen des brevets

(11) **EP 3 556 955 B1**

(12) **FASCICULE DE BREVET EUROPEEN**

(45) Date de publication et mention de la délivrance du brevet:
**15.06.2022 Bulletin 2022/24**

(21) Numéro de dépôt: **19305499.6**

(22) Date de dépôt: **17.04.2019**

(51) Classification Internationale des Brevets (IPC):
**E04B 1/82** *(2006.01)*    **G10K 11/172** *(2006.01)*
**E04C 2/52** *(2006.01)*    E04B 2/74 *(2006.01)*
E04C 2/04 *(2006.01)*    F16F 7/104 *(2006.01)*
C04B 11/00 *(2006.01)*    E04B 1/84 *(2006.01)*
F16F 9/04 *(2006.01)*

(52) Classification Coopérative des Brevets (CPC):
**E04B 1/82; E04C 2/526; G10K 11/172;**
E04B 2/7409; E04B 2/7457; E04B 2001/848;
E04C 2/043; F16F 7/104; F16F 9/04

(54) **PAROI A ABSORBEUR DYNAMIQUE**

WAND MIT DYNAMISCHEM ABSORBER

WALL WITH DYNAMIC ABSORBER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.04.2018 FR 1853392**

(43) Date de publication de la demande:
**23.10.2019 Bulletin 2019/43**

(73) Titulaires:
• **SAINT-GOBAIN PLACO**
**92400 Courbevoie (FR)**
• **SAINT-GOBAIN ISOVER**
**92400 Courbevoie (FR)**

(72) Inventeurs:
• **LEROY, Pierre**
**60370 Saint Felix (FR)**
• **SOURCIS, Benjamin**
**75012 PARIS (FR)**
• **HEULIN, Yoann**
**93200 SAINT DENIS (FR)**

(74) Mandataire: **Ex Materia**
**2, rue Hélène Boucher**
**78280 Guyancourt (FR)**

(56) Documents cités:
WO-A1-2014/148912    CN-A- 103 996 396
FR-A1- 3 009 122    JP-A- 2007 327 218

**Description**

Le domaine de la présente invention est celui des éléments de construction destinés à séparer des espaces, de tels éléments de construction devant assurer une bonne isolation acoustique.

L'isolation acoustique entre deux pièces séparées par une paroi est typiquement assurée soit grâce à l'augmentation de la masse surfacique de la paroi, soit grâce au doublage de cette paroi. Dans le cas de cloisons à double parois, ces cloisons se comportent en basses fréquences comme un système masse-ressort-masse où la lame d'air joue le rôle du ressort couplant les deux parois entre elles. On parle ici de fréquence de « respiration » qui correspond à un déplacement en opposition de phase des parois constituant la cloison.

Le document FR3027082A1 divulgue un absorbeur dynamique fixé sur une plaque qui joue un rôle de paroi. Un tel absorbeur dynamique comprend une lame, une masse et un moyen de fixation permettant d'attacher l'absorbeur dynamique sur la paroi.

L'absorbeur dynamique divulgué dans ce document présente plusieurs inconvénients.

En premier lieu, cet absorbeur dynamique comprend une masse qui oscille sous l'effet d'une sollicitation vibratoire, ce qui peut poser certaines difficultés car l'absorbeur dynamique peut également subir des mouvements hors de la gamme de fréquences qu'il est sensé absorber.

En second lieu, cet absorbeur dynamique impose un lien mécanique avec la paroi. Il convient donc de prévoir, puis de mettre en œuvre, des moyens de fixation entre une face de la paroi et l'absorbeur dynamique. Ces moyens de fixation grèvent ainsi le coût de l'installation, en raison de leur existence et en raison du temps à consacrer pour les mettre en œuvre.

WO 2014/148912 A1 divulgue une paroi à absorbeur dynamique selon le préambule de la revendication 1.

Le but de la présente invention est donc de résoudre les inconvénients décrits ci-dessus en concevant un élément de construction capable de réduire la transparence acoustique de cloison séparatrice dans le domaine des basses fréquences, une telle réduction étant opérée par des moyens dont la fabrication et la mise en œuvre impliquent un coût compatible avec le milieu de la construction, notamment de bâtiment privé ou public.

Un objet de la présente invention concerne ainsi une paroi destinée à assurer une séparation entre deux espaces d'un bâtiment, la paroi comprenant au moins une couche d'un matériau de construction contre laquelle est plaquée au moins une feuille support, la paroi comprenant au moins un absorbeur dynamique qui comporte au moins une cavité, une masse et un élément porteur de la masse. Selon l'invention, l'au moins une cavité est ménagée dans le matériau de construction, l'élément porteur de la masse est au moins en partie formé par la feuille support et au moins une couche d'air est ménagée entre la masse et un fond de la cavité. Une telle couche d'air évite toute interférence mécanique entre la masse et le fond de la cavité, notamment quand la masse oscille.

A titre d'exemple, la couche de matériau peut être une couche de plâtre, avantageusement cartonnée sur l'une et/ou l'autre de ces grandes faces. Alternativement au plâtre, le matériau de cette couche peut être du béton, un métal ou un alliage métallique, une matière synthétique, une matière composite, un matériau comprenant de la laine minérale ou du bois. L'au moins une feuille support peut quant à elle par exemple être une feuille cartonnée, un tissu, une membrane synthétique ou un voile, par exemple de verre, ou tout autre matériau apte à réaliser un effet ressort.

Selon un exemple de réalisation, l'absorbeur dynamique peut comprendre une coque qui délimite la cavité, cette coque étant destinée à se loger dans un espace ménagé dans le matériau de construction.

L'absorbeur dynamique est configuré pour absorber des vibrations basses fréquences, c'est-à-dire des vibrations dont la fréquence est inférieure à 500 Hz, générées par l'entrée en résonnance de deux parois assemblées entre elles et c'est en ce sens qu'il est qualifié de « dynamique ». La présente invention comprend au moins deux modes de réalisation principaux dans lesquels la masse de l'absorbeur dynamique est mobile.

Selon une caractéristique préférée de la présente invention, l'absorbeur dynamique présente une cavité qui, vue de face, présente un contour au moins en partie arrondi. Cette cavité, vue selon une coupe croisant son contour, peut présenter un fond au moins en partie courbé.

Selon une caractéristique préférée de la présente invention, la masse, vue de face, présente une périphérie externe inscrite dans la cavité. Cette masse, vue selon une coupe croisant la périphérie externe, peut également présenter une paroi externe inscrite dans la cavité.

En d'autres termes, la masse présente une conformation générale complémentaire de la forme de la cavité.

Selon une caractéristique préférée de la présente invention, la masse est logée dans la cavité, avantageusement entièrement. On comprend alors que leur complémentarité de forme permet de faciliter le logement de la masse dans la cavité.

Selon une caractéristique préférée de la présente invention, la cavité est en communication avec un environnement extérieur à la paroi. Avantageusement, cette communication entre la cavité et l'environnement extérieur à la paroi permet à la masse d'osciller dans la cavité, ce qui lui permet d'absorber efficacement les fréquences souhaitées.

Selon une caractéristique préférée de la présente invention, l'élément porteur de la masse forme un anneau disposé autour de la masse. L'élément porteur de la masse étant réalisé par la feuille support, on comprend que c'est cette feuille support qui forme l'anneau disposé autour de la masse. Selon un premier mode de réalisation de la présente invention, au moins un orifice est ménagé au travers de l'anneau. Cet orifice permet de mettre en communication la couche d'air ménagée entre la masse et la cavité avec l'environnement extérieur à la paroi.

Selon ce premier mode de réalisation de la présente invention, l'élément porteur de la masse autorise un déplacement de cette masse. Cet élément porteur de la masse présente ainsi une certaine élasticité permettant le déplacement de la masse qu'il porte. De plus, le(s) orifice(s) ménagé(s) dans l'anneau formé par l'élément porteur de masse permet(tent) de libérer une contrainte associée à l'air emprisonné dans la cavité. Les vibrations générées par l'entrée en résonance de deux parois assemblées sont ainsi absorbées par le mouvement de la masse et par le déplacement d'air entre la couche d'air ménagée entre la masse et le fond de la cavité logeant cette masse.

Selon une caractéristique préférée de la présente invention, la paroi est définie par une longueur, une largeur et une épaisseur, l'absorbeur dynamique étant contenu dans l'épaisseur de la paroi. Tel que précédemment mentionné, la paroi peut comprendre deux grandes faces, l'au moins une feuille support étant agencée sur au moins l'une de ces deux grandes faces. On entend par « contenu dans l'épaisseur de la paroi » le fait que l'absorbeur dynamique s'étende entre ces deux grandes faces, avantageusement exclusivement entre ces deux grandes faces.

Selon un deuxième mode de réalisation de la présente invention, l'absorbeur dynamique combine les effets d'une masse mobile à un absorbeur acoustique.

Selon ce deuxième mode de réalisation, l'absorbeur dynamique comprend au moins un conduit traversant la masse et la feuille support porteuse de cette masse, en mettant en communication la cavité avec un environnement extérieur à la paroi.

Plus particulièrement, ce conduit permet de mettre en communication la couche d'air présente dans la cavité avec l'environnement extérieur à la paroi.

Ce conduit peut par exemple être ménagé au centre ou sensiblement au centre de la masse et s'étendre selon une direction générale d'extension perpendiculaire à un plan général de la couche de matériau.

Un tel absorbeur dynamique est par exemple accordé pour absorber des vibrations dont les fréquences sont basses, notamment des fréquences de vibrations résultant d'un phénomène de respiration des parois de l'élément de construction. L'absorbeur dynamique est ainsi configuré pour absorber une vibration dont la fréquence est comprise entre 50 Hz et 250 Hz.

On comprend que l'absorption des vibrations est, selon ce deuxième mode de réalisation, réalisée par le déplacement de l'air présent dans le conduit mettant en relation l'air extérieur et la couche d'air ménagée entre la masse et le fond de la cavité et également par l'oscillation de la masse dans cette cavité.

Selon un autre aspect de la présente invention, une pluralité d'absorbeurs dynamiques peuvent être répartis sur une même face de la paroi. De préférence, la somme des masses de chacune des masses de cette pluralité d'absorbeurs dynamiques est comprise entre 2% et 30% d'une masse totale de la paroi. Avantageusement, cette somme des masses est comprise entre 5% et 15% de la masse totale de la paroi. Encore plus avantageusement, cette somme des masses est égale ou sensiblement égale à 10% de la masse totale de la paroi.

Avantageusement, le matériau de construction et/ou la masse sont réalisés en plâtre. Alternativement, le matériau de construction et/ou la masse peuvent être réalisés en gypse ou en ciment.

Un autre aspect concerne également un élément de construction comprenant au moins une ossature sur laquelle sont fixées une première paroi et une deuxième paroi en ménageant entre elles un espace interne, au moins une des parois étant conforme à la présente invention. Autrement dit, au moins l'une des parois formant l'élément de construction comprend au moins un absorbeur dynamique selon l'un quelconque des modes de réalisation de la présente invention.

On comprend que la première paroi et la deuxième paroi sont solidaires de l'ossature. Une telle ossature est par exemple constituée d'une pluralité de montants et/ou de rails. Les parois sont ainsi plaquées verticalement ou horizontalement contre cette ossature. Par exemple, la première paroi et la deuxième paroi sont réalisées en plâtre, c'est-à-dire que la première paroi et la deuxième paroi sont, selon cet exemple, des plaques de plâtre.

Selon un autre exemple, la première paroi et la deuxième paroi peuvent être réalisées dans deux matériaux différents. Par exemple, la première paroi peut être réalisée en plâtre ou en laine minérale, tandis que la deuxième paroi peut être réalisée en béton, par exemple en formant un plafond ou un mur d'un bâtiment. Une fois la première paroi et la deuxième paroi assemblées, un espace interne est créé entre ces deux parois.

Autrement dit, on comprend de ce qui précède que l'élément de construction selon la présente invention peut former un mur, c'est-à-dire qu'il s'agit alors d'un élément de construction vertical, ou bien il peut être utilisé pour former un plafond, c'est-à-dire qu'il s'agit alors d'un élément de construction horizontal.

Selon une caractéristique préférée de l'élément de construction, l'élément porteur de la masse borde l'espace interne. En d'autres termes, le(s) absorbeur(s) dynamique(s) est/sont ménagés depuis une face interne de la paroi, c'est-à-dire une face de cette paroi tournée vers l'espace interne plutôt que vers l'environnement extérieur à l'élément de construction.

Optionnellement, un élément acoustiquement absorbant peut être disposé dans l'espace interne.

Une lame d'air peut également être aménagée entre une face de l'élément acoustiquement absorbant et la feuille support de la paroi.

La paroi selon la présente invention peut être realisée par un procédé comprenant une étape au cours de laquelle au moins une cavité est ménagée dans un matériau de construction, une étape au cours de laquelle au moins une masse est disposée dans la cavité et une étape au cours de laquelle le matériau de construction est recouvert par au moins une feuille support. Les étapes de réalisation de ce procédé de fabrication peuvent être réalisées dans n'importe quel ordre, sans sortir du contexte de l'invention.

Par exemple, le matériau de construction peut être dans un état solide au cours de l'étape de réalisation de l'au moins une cavité, cette au moins une cavité étant formée par abrasion ou par creusement dudit matériau de construction.

Dans ces différentes variantes de mise en œuvre du procédé, le matériau de construction est avantageusement du plâtre ou de la laine minérale.

D'autres caractéristiques, détails et avantages ressortiront plus clairement à la lecture de la description détaillée donnée ci-après à titre indicatif, en relation avec les différents exemples de réalisation illustrés sur les figures suivantes :

- la figure 1 est une représentation schématique en perspective, d'un élément de construction selon la présente invention ;

- la figure 2 est une vue schématique en perspective d'une paroi participant à l'élément de construction représenté sur la figure 1 ;

- les figures 3 et 4 sont respectivement une vue schématique en coupe et une vue schématique de face d'un absorbeur dynamique intégré dans une paroi selon un premier mode de réalisation, la coupe étant réalisée selon un plan passant par un centre de cet absorbeur dynamique ;

- les figures 5 et 6 sont respectivement une vue schématique en coupe et une vue schématique de face d'un absorbeur dynamique intégré à une paroi selon un deuxième mode de réalisation, la coupe étant réalisée selon un plan passant par un centre de cet absorbeur dynamique.

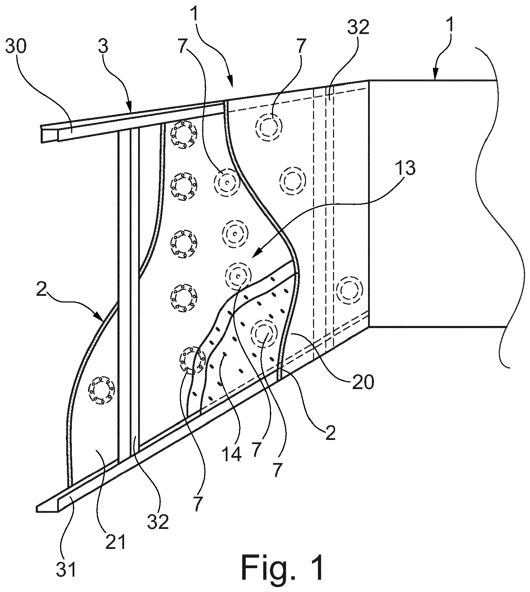

La figure 1 est une vue schématique en perspective d'un élément de construction 1 selon la présente invention. Cet élément de construction 1 comprend deux parois 2 assemblées sur une ossature 3. Cette ossature 3 peut par exemple consister en une armature métallique comprenant des rails 30, 31 montés sur des montants 32 perpendiculaires à ces rails 30, 31. Un tel élément de construction 1 est configuré pour être agencé de sorte à cloisonner deux espaces d'un bâtiment quel qu'il soit.

Par exemple, l'ossature 3 peut comprendre un rail supérieur 30 et un rail inférieur 31 entre lesquels est disposé au moins un montant 32, et avantageusement une multiplicité de tels montants 32. Ces rails supérieur et inférieur 30, 31 sont disposés horizontalement et forment respectivement une zone d'appui et de fixation d'un bord de la première paroi 2 et/ou d'un bord de la deuxième paroi 2. Avantageusement, l'ossature 3 permet de créer un espace interne 13 entre les parois 2 ainsi assemblées. Par exemple, cet espace interne 13 peut recevoir un élément acoustiquement absorbant 14 et/ou thermiquement isolant. Cet élément acoustiquement absorbant 14 peut par exemple être configuré pour absorber les ondes de fréquences supérieures à 250 Hz. Bien que représenté de manière tronquée, un tel élément acoustiquement absorbant 14 est disposé de haut en bas entre le rail supérieur 30 et le rail inférieur 31, et de gauche à droite, entre deux supports 32. Un tel élément acoustiquement absorbant 14 peut occuper tout ou partie d'un volume de l'espace interne 13.

Chaque paroi 2 comprend une grande face externe 20, une grande face interne 21, cette grande face externe 20 et cette grande face interne 21 étant reliées par deux faces latérales, une face supérieure et une face inférieure.

On comprend que lorsque ces parois 2 sont assemblées sur l'ossature 3, seule l'une des grandes faces 20, 21 de chacune d'entre elles est visible et illustrée sur la figure 1.

Les termes « externe » et « interne » doivent être entendus relativement à la configuration de l'élément de construction 1 constitué par ces parois 2 et l'ossature 3. Ainsi, les grandes faces internes 21 de chacune des parois 2 font toutes deux face à l'ossature 3 tandis que leur grandes faces externes 20 sont tournées vers un environnement extérieur de l'élément de construction 1. En d'autres termes, les grandes faces externes 20 des parois 2 délimitent l'élément de construction 1 et leurs grandes faces internes 21 délimitent quant à elles l'espace interne 13 ménagé entre ces deux parois 2. C'est également par ces grandes faces internes 21 que les parois 2 sont accolées/solidarisées sur l'ossature 3 pour former l'élément de construction 1.

Lorsque ces parois 2 sont assemblées deux à deux, un phénomène de résonnance peut être observé. On parle de « respiration » de l'élément de construction 1 comprenant ces parois 2. Ce phénomène de résonance amplifie le transfert de l'énergie vibratoire de la paroi qui reçoit l'onde vers la deuxième paroi, engendrant un indice d'affaiblissement acoustique faible à la fréquence de résonance.

Afin d'absorber les fréquences de ces vibrations, au moins un absorbeur dynamique 7 est disposé dans au moins l'une de ces parois 2. Avantageusement, une paroi 2 comprend une pluralité d'absorbeurs dynamiques 7, chacun de ces absorbeurs dynamiques 7 comprenant alors une cavité, une masse et un élément porteur de la masse. Ces absorbeurs dynamiques 7 ainsi que les éléments qui les composent seront plus amplement détaillés dans la suite de la description.

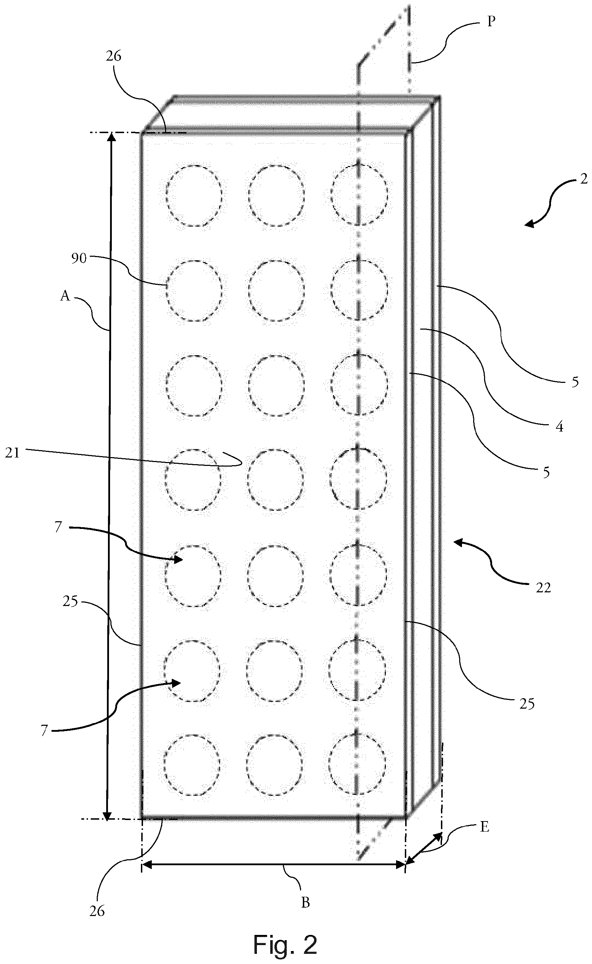

La figure 2 est une vue en perspective d'une paroi 2 selon l'invention, vue par exemple depuis l'espace interne de l'élément de construction représenté sur la figure 1. Autrement dit, cette figure 2 rend particulièrement visible la face interne 21 de cette paroi 2.

Les parois 2 constituant partiellement cet élément de construction 1 sont respectivement composées d'une couche 4 d'un matériau de construction pris en sandwich entre deux feuilles supports 5. Dans les exemples présentés dans ce document, ces feuilles support 5 sont réalisées par des feuilles cartonnées, mais il est entendu que d'autres matériaux pourraient être utilisés sans nuire à l'invention. Par exemple ces feuilles support 5 peuvent être réalisées par du tissu ou un voile, par exemple de verre, en fonction des propriétés recherchées pour le produit final, à savoir l'élément de construction 1.

La couche 4 de matériau de construction peut par exemple être réalisée en béton, en un métal ou un alliage métallique, en une matière synthétique, une matière composite ou du bois. Selon un exemple de réalisation illustré sur les figures 1 à 6, cette couche 4 de matériau de construction est réalisée par du plâtre.

On comprend que les grandes faces externe et interne 20, 21 précédemment décrites sont respectivement formées par une feuille cartonnée 5. Les faces latérales 22 sont quant à elles formées par des tranches des différentes strates de la paroi 2 concerné. Ainsi, chaque face latérale 22 de chaque paroi 2 est formée par une tranche de la couche 4 de plâtre - selon l'exemple décrit ici - prise en sandwich entre deux tranches de deux feuilles cartonnées 5.

Ainsi, l'une de ces feuilles cartonnées 5 forme la grande face interne 21 de la paroi 2 et l'autre feuille cartonnée 5 forme la grande face externe de cette paroi 2.

Tel que cela est visible sur la figure 2, la paroi 2 présente une forme générale de parallélépipède. On comprend alors que la grande face externe de cette paroi, ainsi que sa grande face interne 21 s'étendent principalement dans deux plans parallèles. De même, les faces latérales 22 reliant cette grande face interne 21 à cette grande face externe s'étendent, chacune, dans deux plans parallèles.

Selon un exemple de réalisation illustré sur la figure 2, la paroi 2 présente plus particulièrement une forme de parallélépipède rectangle.

Selon l'invention, chaque paroi 2 est définie par une longueur A, une largeur B et une épaisseur E. Tel que représenté, la largeur B est mesurée entre deux bords verticaux 25 de l'une des grandes faces 20, 21, selon une droite perpendiculaire à chacune des faces latérales 22 de cette paroi 2. On entend par « bords verticaux » des grandes faces, des bords communs à ces grandes faces 20, 21 et aux faces latérales 22. La largeur B de ces parois 2 est par exemple comprise entre 400 mm et 1250 mm.

Ces grandes faces 20, 21 étant sensiblement rectangulaires, elles comprennent deux autres bords dits « bords latéraux 26 », chaque bord latéral 26 de l'une des grandes faces 20, 21 reliant les deux bords verticaux de cette grande face 20, 21. La longueur A de chaque paroi 2 est ainsi mesurée entre deux bords latéraux 26 de l'une de ces grandes faces 20, 21, le long d'une droite parallèle à chacune des faces latérales 22 de la grande face 20, 21 concernée. Par exemple, la longueur A de chaque paroi est comprise entre 300 mm et 4210 mm.

Enfin, l'épaisseur E de chaque paroi 2 est mesurée entre sa grande face interne 21 et sa grande face externe, selon une droite perpendiculaire à cette grande face interne 21 et à cette grande face externe. Cette épaisseur E est par exemple comprise entre 6 mm et 25 mm.

Tel que mentionné ci-dessus, cette paroi 2 comprend au moins un absorbeur dynamique 7, avantageusement une pluralité d'absorbeurs dynamiques 7, configuré(s) pour absorber les vibrations générées par la résonnance de deux parois assemblées entre elles. Ces absorbeurs dynamiques 7 comprennent, chacun, une masse portée par un élément porteur 6 et logée dans une cavité. Par exemple, cet élément porteur 6 est réalisé par une portion de la feuille cartonné 5 formant la grande face interne 21 de la paroi 2.

Tel que cela est visible sur la figure 2, cette feuille cartonnée 5 présente ainsi une pluralité de cercles, chacun de ces cercles représentant l'un des absorbeurs dynamiques 7.

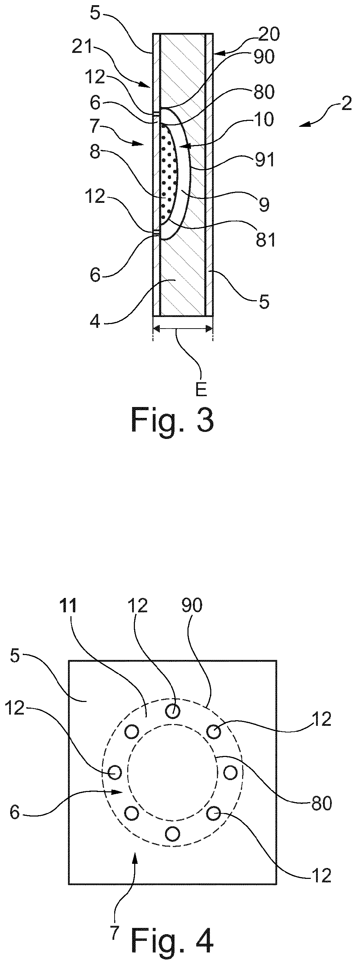

La figure 3 est une représentation schématique de la paroi 2 selon un premier mode de réalisation, vue dans une coupe réalisée selon un plan P parallèle aux faces latérales 22 de cette paroi 2 et passant par un centre d'au moins l'un des cercles décrits ci-dessus. Ce plan P est représenté sur la figure 2. Cette figure 3 rend notamment visible l'un des absorbeurs dynamiques 7 ménagés dans cette paroi 2.

La figure 4 est quant à elle une vue de face de l'un de ces cercles visibles sur la figure 2. Autrement dit, cette figure 4 est une représentation schématique d'une portion de la feuille cartonnée 5 formant la face interne de la paroi concernée, cette portion de la feuille cartonnée 5 portant l'un des absorbeurs dynamiques ménagés dans ladite paroi.

Chaque absorbeur dynamique 7 comprend une masse 8 logée dans une cavité 9 et portée par un élément porteur 6, en l'espèce réalisé par une portion de l'une des feuilles cartonnées 5 de la paroi 2. Plus précisément, cette portion de la feuille cartonnée 5 forme au moins un anneau 11 entourant la masse 8.

Notamment pour des raisons d'efficacité, la feuille cartonnée 5 portant la masse 8 est la feuille cartonnée 5 réalisant la grande face interne 21 de la paroi 2 concernée.

On comprend donc que, selon l'invention, l'élément porteur 6 de la masse 8 borde l'espace interne ménagé entre deux parois 2 formant l'élément de construction.

Tel qu'illustré sur la figure 3, la cavité 9 est ménagée dans la couche 4 de matériau de construction, en l'espèce dans la couche 4 de plâtre, et est au moins partiellement recouverte par la feuille cartonnée 5. Tel que cela est visible sur cette figure, on comprend que la cavité 9 est ménagée dans l'épaisseur E de la paroi 2, c'est-à-dire que cette cavité s'étend entre les feuilles cartonnées 5 formant respectivement la grande face interne 21 et la grande face externe 20 de cette paroi 2. Selon l'invention, la cavité 9 s'ouvre sur l'espace interne ménagée entre deux parois 2 participant à former un élément de construction 1.

Cette cavité 9 présente un contour 90 au moins partiellement arrondi. Selon l'exemple illustré sur les figures 2 à 6, cette cavité 9 présente un contour 90 totalement circulaire duquel résultent les cercles visibles sur la figure 2, et précédemment décrits. Cette cavité 9 vue en coupe selon un plan croisant ce contour 90, comprend un fond 91 courbé, particulièrement visible sur la figure 3.

Dans cette cavité 9 est logée la masse 8, cette masse 8 présentant une forme complémentaire à cette cavité 9. Autrement dit, chaque masse 8 présente une périphérie externe 80 arrondie, complémentaire du contour 90 de la cavité 9. Tel que cela est visible sur la figure 4, ce contour 90 et cette périphérie externe 80 forme ainsi deux cercles concentriques entre lesquels est ménagé l'anneau 11 porteur de la masse 8. On comprend ainsi que cet anneau 11 est solidaire à la fois de la périphérie externe 80 de la masse 8 et du contour 90 de la cavité 9.

De plus, chaque masse 8 comprend une paroi externe 81 courbe, vue selon la coupe illustrée sur la figure 3, complémentaire de la forme du fond 91 de la cavité 9.

Selon l'invention, une couche d'air 10 est ménagée entre la masse 8 et le fond 91 de la cavité 9. En d'autres termes, la masse 8 présente un volume inférieur au volume de la cavité 9 de sorte que la paroi externe 81 de cette masse 8 ne soit pas au contact direct du fond 91 de la cavité 9.

Tel que précédemment mentionné, l'élément porteur 6 de la masse 8 est formé par une portion de la feuille cartonnée 5 formant la grande face interne 21 de la paroi 2. La figure 4 illustre cet élément porteur 6 vu de face, c'est-à-dire vue depuis l'espace interne de l'élément de construction décrit en référence à la figure 1.

Tel qu'illustré, cet élément porteur 6 est délimité par le contour 90 de la cavité et par la périphérie externe 80 de la masse logée dans cette cavité.

Avantageusement, cet élément porteur 6 est configuré pour autoriser un mouvement de la masse 8 qu'il porte. On comprend que pour permettre le mouvement de cette masse 8, l'air contenu dans la cavité 9, et plus exactement de l'air formant la couche d'air 10 interposée entre cette masse et le fond de la cavité doit pouvoir être déplacé, en entrant ou en sortant de cette cavité. A cette fin, des orifices 12 sont ménagés entre le contour 90 de la cavité et la périphérie externe 80 de la masse, c'est-à-dire à travers l'anneau 11 formant l'élément porteur 6, et relient un environnement extérieur de la paroi à la cavité ménagée dans cette paroi. En d'autres termes, ces orifices 12 permettent l'entrée et la sortie de l'air contenu dans la couche d'air ménagée entre la masse et le fond de la cavité.

Deux de ces orifices 12 sont également représentés sur la figure 3. Le nombre d'orifices 12 peut avantageusement être adapté en fonction des besoins, c'est-à-dire en fonction de la liberté de mouvement que l'on souhaite octroyer à la masse.

On comprend que lorsque deux parois participant à la formation d'un élément de construction tel que précédemment décrit entrent en résonance, les vibrations générées sont absorbées par le mouvement de cette masse au sein de sa cavité, permettant ainsi une diminution des nuisances acoustiques générées par de telles vibrations.

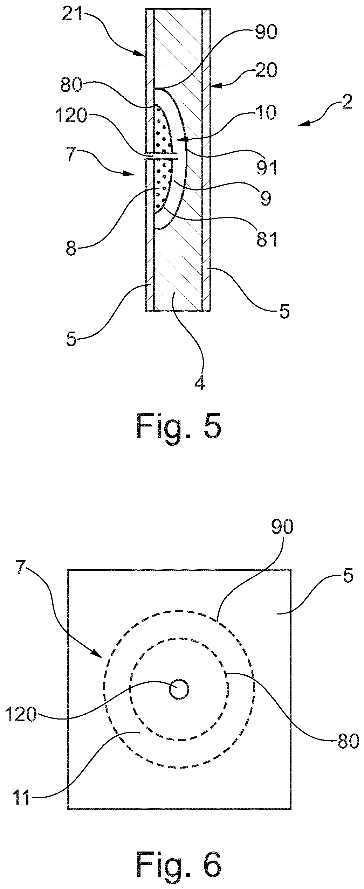

La figure 5 est une représentation schématique de la paroi 2 selon un deuxième mode de réalisation, vue dans une coupe réalisée selon le plan P précédemment décrit et illustré sur la figure 2. Cette figure 5 illustre ainsi l'un des absorbeurs dynamiques 7 ménagés dans cette paroi 2.

La figure 6 est quant à elle une schématisation détaillée de l'un de ces absorbeurs dynamiques 7 selon le deuxième mode de réalisation de la présente invention. Autrement dit, cette figure 6 est une représentation de face d'une portion de la paroi concernée, cette portion portant l'un des absorbeurs dynamiques ménagés dans ladite paroi.

Ce deuxième mode de réalisation diffère du premier mode de réalisation notamment dans le nombre et la position des orifices permettant de relier l'extérieur de la paroi à la cavité 9.

Selon ce deuxième mode de réalisation, un conduit 120 est ménagé à travers la masse 8. Tel qu'illustré, ce conduit 120 s'étend depuis l'élément porteur 6 de cette masse 8 et jusqu'à la couche d'air 10 ménagée entre la masse 8 et le fond 91 de la cavité 9. Tel qu'illustré sur la figure 5, ce conduit 120 est ménagé, sensiblement, depuis un centre de la masse et s'étend principalement selon une direction perpendiculaire à au moins l'une des grandes faces 21, 20 de la paroi concernée 2. Avantageusement, ce conduit 120 s'étend perpendiculairement à au moins la grande face interne 21 de la paroi 2 concernée.

Ce conduit 120 est délimité par un tube qui débouche dans la couche d'air 10 ménagé entre la masse 8 et le fond 91 de la cavité 9 d'une part et dans l'environnement extérieur à la paroi d'autre part. Par exemple, l'absorbeur dynamique ainsi réalisé peut être configuré pour absorber des fréquences comprises entre 50Hz et 500Hz.

Le conduit 120 est ainsi défini par son diamètre, et sa longueur, le diamètre de ce conduit 120 peut être constant sur toute sa longueur mesurée le long de la direction d'extension principale du conduit 120 entre la feuille cartonnée 5 dans laquelle il est ménagé et une extrémité du tube par laquelle il débouche dans la couche d'air 10 de la cavité 9. Alternativement, le diamètre du conduit 120 peut être variable, avantageusement selon un profil conique. Cette longueur et ce diamètre participent, avec le volume de la couche d'air 10 ménagé entre la masse 8 et le fond 91 de la cavité 9, à l'accordement du résonateur aux fréquences que l'on cherche à absorber. En d'autres termes, cette longueur et ce diamètre peuvent être adaptés en fonction de la fréquence que l'on souhaite absorber. Selon l'invention, le diamètre et la longueur de ce conduit 120 sont calculées de sorte que le résonateur ainsi réalisé absorbe les ondes dont les fréquences sont comprises entre 50Hz et 500Hz.

On comprend que ce conduit 120 permet ainsi une communication entre l'environnement extérieur à la paroi 2, en l'espèce l'espace interne ménagé entre deux parois assemblées, tel que décrit en référence à la figure 1, et l'air de la couche d'air 10 ménagée entre la masse 8 et le fond 91 de la cavité 9.

Tel que cela est notamment visible sur la figure 6, l'anneau 11 formé entre la périphérie externe 80 de la masse 8 et le contour 90 de la cavité 9 est plein, c'est-à-dire que cet anneau 11 ne présente pas d'orifice. L'absorbeur dynamique 7 selon ce deuxième mode de réalisation est ainsi un absorbeur dynamique hybride en ce sens qu'il se comporte à la fois comme un résonateur acoustique, et comme un résonateur mécanique dont la masse est mobile.

On comprend que l'air contenu dans le conduit 120 permet, par son déplacement, d'absorber au moins une partie des vibrations générées par le phénomène de résonnance précédemment décrit.

Selon un aspect de la présente invention, la somme des masses de chacune des masses 8 de l'ensemble des absorbeurs dynamiques 7 d'une paroi 2 représente entre 2% et 30% d'une masse totale de la paroi 2 dans laquelle ils sont ménagés. En d'autres termes, la relation suivante est vérifiée :

$$0.02 \leq M/Mtot \leq 0.3$$

avec « M » la somme des masses de chaque masse 8 des absorbeurs dynamiques 7 d'une paroi 2 et « Mtot » la masse totale de cette paroi 2.

Avantageusement, la somme des masses de chacune des masses 8 de l'ensemble des absorbeurs dynamiques 7 d'une paroi 2 représente entre 5% et 15% de la masse totale de la paroi dans laquelle ils sont ménagés. Encore plus avantageusement, cette somme des masses est égale ou sensiblement égale à 10% de la masse totale de la paroi concernée.

Selon l'invention, les cavités sont par exemple formées dans une couche de matériau solide par abrasion ou creusement de cette couche de matériau. En d'autres termes, selon cet exemple, les cavités sont obtenues par enlèvement de matière.

Il est entendu que ces cavités peuvent être formées par tout autre moyen connu, sans sortir du domaine de la présente invention.

On comprend de ce qui précède que la présente invention propose un moyen simple, efficace et peu coûteux d'absorption de basses fréquences résultant de vibrations générées par la résonnance de deux parois assemblées pour former un élément de construction. Avantageusement, l'invention permet ainsi de réduire les nuisances acoustiques liées à ces vibrations et qui peuvent être gênantes pour l'utilisateur final de l'élément de construction comprenant de telles parois.

L'invention ne saurait toutefois se limiter aux moyens et configurations décrits et illustrés ici, et elle s'étend également à tous moyens ou configurations équivalents et à toute combinaison techniquement opérante de tels moyens dans le cadre de protection défini par les revendications annexées. En particulier, la forme et les dimensions des absorbeurs dynamiques ainsi que les matériaux utilisés pour réaliser ces absorbeurs dynamiques peuvent être modifiés, dans la mesure où ils remplissent les fonctionnalités décrites dans ces revendications.

## Revendications

1. Paroi (2) destinée à assurer une séparation entre deux espaces d'un bâtiment, la paroi (2) comprenant au moins une couche d'un matériau de construction (4) contre laquelle est plaquée au moins une feuille support (5), la paroi (2) comprenant au moins un absorbeur dynamique (7) qui comporte au moins une cavité (9), une masse (8) et un élément porteur (6) de la masse (8), où l'au moins une cavité (9) est ménagée dans la couche de matériau de construction et où l'élément porteur (6) de la masse (8) est au moins en partie formé par la feuille support (5), **caractérisée en ce qu'**une couche d'air (10) est ménagée entre la masse (8) et un fond (91) de la cavité (9).

2. Paroi (2) selon la revendication 1, dans laquelle la cavité (9), vue de face, présente un contour (90) au moins en partie arrondi.

3. Paroi (2) selon la revendication 2, dans laquelle la cavité (9), vue selon une coupe croisant son contour (90), présente un fond (91) au moins en partie courbé.

4. Paroi (2) selon l'une quelconque des revendications 2 ou 3, dans laquelle la masse (8), vue de face, présente une périphérie externe (80) inscrite dans la cavité (9).

5. Paroi (2) selon les revendications 3 et 4, dans laquelle la masse (8), vue selon une coupe croisant la périphérie externe (80), présente une paroi externe (81) inscrite dans la cavité (9).

6. Paroi (2) selon l'une quelconque des revendications précédentes, dans laquelle la masse (8) est logée dans la cavité (9).

7. Paroi (2) selon l'une quelconque des revendications précédentes, dans laquelle la cavité (9) est en communication avec un environnement extérieur à la paroi (2).

8. Paroi (2) selon l'une quelconque des revendications précédentes, dans laquelle l'élément porteur (6) de la masse (8) forme un anneau (11) disposé autour de la masse (8).

9. Paroi (2) selon l'une quelconque des revendications précédentes, dans laquelle l'élément porteur (6) de la masse (8) autorise un déplacement de cette masse (8).

10. Paroi (2) selon l'une quelconque des revendications précédentes, définie par une longueur A, une largeur B et une épaisseur E, l'absorbeur dynamique (7) étant contenu dans l'épaisseur E de la paroi (2).

11. Paroi (2) selon l'une quelconque des revendications précédentes, comprenant une pluralité d'absorbeurs dynamiques (7) répartis sur une même face (21) de la paroi (2).

12. Paroi (2) selon la revendication précédente, dans laquelle la somme des masses de chacune des masses (8) de la pluralité d'absorbeurs dynamiques (7) est comprise entre 2% et 30% d'une masse totale de la paroi (2).

13. Paroi (2) selon l'une quelconque des revendications précédentes, dans laquelle la couche matériau de construction (4) et/ou la masse (8) sont en plâtre.

14. Elément de construction (1) comprenant au moins une ossature (3) sur laquelle sont fixées une première paroi (2) et une deuxième paroi (2) en ménageant entre elles un espace interne (13), caractérisé en qu'au moins une des parois (2) est conforme à l'une quelconque des revendications précédentes.

15. Elément de construction (1) selon la revendication précédente, dans lequel l'élément porteur (6) de la masse (8) borde l'espace interne.

16. Elément de construction (1) selon l'une quelconque des revendications 14 ou 15, comprenant un élément acoustiquement absorbant disposé dans l'espace interne.

17. Elément de construction (1) selon la revendication précédente, dans lequel une lame d'air est aménagée entre une face de l'élément acoustiquement absorbant et la feuille support (5) de la paroi (2).

**Patentansprüche**

1. Wand (2) zur Sicherstellung einer Trennung zwischen zwei Räumen eines Gebäudes, wobei die Wand (2) wenigstens eine Schicht aus einem Baumaterial (4) umfasst, an welche wenigstens ein Stützblatt (5) gepresst ist, wobei die Wand (2) wenigstens einen dynamischen Absorber (7) umfasst, der wenigstens einen Hohlraum (9), eine Masse (8) und ein Tragelement (6) der Masse (8) aufweist, wobei der wenigstens eine Hohlraum (9) in der Schicht aus Baumaterial (4) vorgesehen ist und das Tragelement (6) der Masse (8) wenigstens teilweise von dem Stützblatt (5) gebildet ist, **dadurch gekennzeichnet, dass** eine Luftschicht (10) zwischen der Masse (8) und einem Boden (91) des Hohlraums (9) vorgesehen ist.

2. Wand (2) nach Anspruch 1, wobei der Hohlraum (9) von vorne gesehen eine wenigstens teilweise abgerundete Kontur (90) aufweist.

3. Wand (2) nach Anspruch 2, wobei der Hohlraum (9) gesehen in einem Schnitt, der seine Kontur (90) schneidet, einen wenigstens teilweise gekrümmten Boden (91) aufweist.

4. Wand (2) nach einem der Ansprüche 2 oder 3, wobei die Masse (8) von vorne gesehen einen Außenumfang (80) aufweist, der im Hohlraum (9) liegt.

5. Wand (2) nach den Ansprüchen 3 und 4, wobei die Masse (8) gesehen in einem Schnitt, der ihren Außenumfang (80) schneidet, eine Außenwand (81) aufweist, die im Hohlraum (9) liegt.

6. Wand (2) nach einem der vorhergehenden Ansprüche, wobei die Masse (8) im Hohlraum (9) aufgenommen ist.

7. Wand (2) nach einem der vorhergehenden Ansprüche, wobei der Hohlraum (9) mit einer Umgebung außerhalb der Wand (2) in Verbindung steht.

8. Wand (2) nach einem der vorhergehenden Ansprüche, wobei das Tragelement (6) der Masse (8) einen Ring (11) bildet, der um die Masse (8) angeordnet ist.

9. Wand (2) nach einem der vorhergehenden Ansprüche, wobei das Tragelement (6) der Masse (8) eine Verschiebung dieser Masse (8) erlaubt.

10. Wand (2) nach einem der vorhergehenden Ansprüche, definiert durch eine Länge A, eine Breite B und eine Dicke E, wobei der dynamische Absorber (7) in der Dicke E der Wand (2) enthalten ist.

**11.** Wand (2) nach einem der vorhergehenden Ansprüche, umfassend eine Mehrzahl von dynamischen Absorbern (7), die auf einer selben Seite (21) der Wand (2) verteilt sind.

**12.** Wand (2) nach dem vorhergehenden Anspruch, wobei die Summe der Massen jeder der Massen (8) der Mehrzahl von dynamischen Absorbern (7) zwischen 2 % und 30 % einer Gesamtmasse der Wand (2) beträgt.

**13.** Wand (2) nach einem der vorhergehenden Ansprüche, wobei die Schicht aus Baumaterial (4) und/oder die Masse (8) aus Gips sind.

**14.** Bauelement (1) umfassend wenigstens ein Gerüst (3), an dem eine erste Wand (2) und eine zweite Wand (2) befestigt sind, wobei zwischen ihnen ein Innenraum (13) vorgesehen ist, **dadurch gekennzeichnet, dass** wenigstens eine der Wände (2) einem der vorhergehenden Ansprüche entspricht.

**15.** Bauelement (1) nach dem vorhergehenden Anspruch, wobei das Tragelement (6) der Masse (8) an den Innenraum angrenzt.

**16.** Bauelement (1) nach einem der Ansprüche 14 oder 15, umfassend ein akustisch absorbierendes Element, das im Innenraum angeordnet ist.

**17.** Bauelement (1) nach dem vorhergehenden Anspruch, wobei ein Luftspalt zwischen einer Seite des akustisch absorbierenden Elements und dem Stützblatt (5) der Wand (2) angeordnet ist.

**Claims**

**1.** Wall (2) intended to ensure a separation between two spaces of a building, the wall (2) comprising at least one layer of a construction material (4) against which is pressed at least one support sheet (5), the wall (2) comprising at least one dynamic absorber (7) which comprises at least one cavity (9), a mass (8) and a bearing element (6) for the mass (8), in which the at least one cavity (9) is formed in the layer of construction material (4) and in which the bearing element (6) for the mass (8) is at least partly formed by the support sheet (5), **characterized in that** a layer of air (10) is formed between the mass (8) and the bottom (91) of the cavity (9).

**2.** Wall (2) according to Claim 1, wherein the cavity (9), seen from the front, has an at least partly rounded outline (90).

**3.** Wall (2) according to Claim 2, wherein the cavity (9), seen in a cross-section crossing its outline (90), has an at least partly curved bottom (91).

**4.** Wall (2) according to either one of Claims 2 and 3, wherein the mass (8), seen from the front, has an outer periphery (80) inscribed within the cavity (9).

**5.** Wall (2) according to Claims 3 and 4, wherein the mass (8), seen in a cross-section crossing the outer periphery (80), has an outer wall (81) inscribed within the cavity (9).

**6.** Wall (2) according to any one of the preceding claims, wherein the mass (8) is housed in the cavity (9).

**7.** Wall (2) according to any one of the preceding claims, wherein the cavity (9) is connected with an environment outside the wall (2).

**8.** Wall (2) according to any one of the preceding claims, wherein the bearing element (6) for the mass (8) forms a ring (11) positioned around the mass (8).

**9.** Wall (2) according to any one of the preceding claims, wherein the bearing element (6) for the mass (8) allows a movement of this mass (8).

**10.** Wall (2) according to any one of the preceding claims, defined by a length A, a width B and a thickness E, the dynamic absorber (7) being contained within the thickness E of the wall (2).

**11.** Wall (2) according to any one of the preceding claims, comprising a plurality of dynamic absorbers (7) distributed on a same face (21) of the wall (2).

**12.** Wall (2) according to the preceding claim, wherein the sum of the masses of each of the masses (8) of the plurality of dynamic absorbers (7) is between 2% and 30% of a total mass of the wall (2).

**13.** Wall (2) according to any one of the preceding claims, wherein the layer of construction material (4) and/or the mass (8) are made of plaster.

**14.** Construction element (1) comprising at least one framework (3) to which are fixed a first wall (2) and a second wall (2), forming between them an internal space (13), **characterized in that** at least one of the walls (2) conforms to any one of the preceding claims.

**15.** Construction element (1) according to the preceding claim, wherein the bearing element (6) for the mass (8) borders the internal space.

16. Construction element (1) according to either one of Claims 14 and 15, comprising an acoustically absorbent element positioned in the internal space.

17. Construction element (1) according to the preceding claim, wherein an air blade is formed between a face of the acoustically absorbent element and the support sheet (5) of the wall (2).

Fig. 1

Fig. 2

Fig. 3

Fig. 4

Fig. 5

Fig. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3027082 A1

- WO 2014148912 A1